# EUROPEAN PATENT APPLICATION

(11) **EP 3 779 832 A1**
(43) Date of publication of application: **17.02.2021**
(21) Application number: 19850892.1
(22) Date of filing: 24.06.2019
(51) Int. Cl.: G06Q 20/40

(54) **PAYMENT RISK CONTROL METHOD AND SYSTEM**

(30) Priority: 20.08.2018 CN 201810950368
(71) Applicant: Advanced New Technologies Co., Ltd., George Town, Grand Cayman KY1-9008 (KY)
(72) Inventor: ZHOU, Xuedong, Hangzhou, Zhejiang 311121 (CN)
(74) Representative: Goddar, Heinz J.
(86) International application number: PCT/CN2019/092491
(87) International publication number: WO 2020/038092

(57) **Abstract**

A payment risk control method and system are disclosed. The payment risk control method includes: after receiving trigger of a station entering and exiting payment operation, generating, by an application side, a payment graphic code generation request carrying preset risk control features, and sending the request to a risk control side; after receiving the payment graphic code generation request sent by the application side, obtaining, by the risk control side, pre-stored historical risk control features of the account according to a payment account feature in the request; detecting, by the risk control side, whether there is a transaction risk on the application side by comparing the obtained historical risk control features with the risk control features carried in the request, and returning a risk control detection result to the application side; and after receiving a result of no transaction risk returned by the risk control side, generating and displaying, by the application side, a payment graphic code.

## Description

### Technical Field

Embodiments of the present specification relate to the technical field of Internet applications, and in particular, to a payment risk control method and system.

### Background

With the development of smart terminals and the popularization of network applications, a user can implement various payment operations through an application client with a payment function installed on a terminal. For example, when using public transportation such as buses and subways, the user can use a client of an electronic wallet to pay transportation fees. However, for users and payment institutions, there may be risks such as account thefts and deduction failures.

Based on the prior art, a payment risk control solution for a scenario of electronic payment of public transportation fees is needed.

### Summary of the Invention

In response to the above technical problems, the embodiments of the present specification provide a payment risk control method and system. The technical solutions are as follows.

According to a first aspect of the embodiments of the present specification, there is provided a payment risk control method. The method includes:
after receiving trigger of a station entering and exiting payment operation, generating, by an application side, a payment graphic code generation request carrying preset risk control features, and sending the request to a risk control side, wherein the risk control features at least include: a payment account feature, a current location feature, and a station entering and exiting feature;
after receiving the payment graphic code generation request sent by the application side, obtaining, by the risk control side, pre-stored historical risk control features of the account according to the payment account feature in the request;
detecting, by the risk control side, whether there is a transaction risk on the application side by comparing the obtained historical risk control features with the risk control features carried in the request, and returning a risk control detection result to the application side, wherein a method for detecting the transaction risk includes: deciding whether a payment graphic code generated this time is used for station entering or station exiting according to the station entering and exiting feature; if it is for station entering, deciding whether a frequency of the payment graphic code generation request is higher than a preset threshold, and if so, determining that there is a transaction risk; and if it is for station exiting, deciding whether the current location feature and a corresponding station entering location feature in the historical risk control features meet a preset location relation condition, and if not, determining that there is a transaction risk; and
after receiving a result of no transaction risk returned by the risk control side, generating and displaying, by the application side, a payment graphic code.

According to a second aspect of the embodiments of the present specification, there is provided a payment risk control method applied to an application side. The method includes:
after receiving trigger of a station entering and exiting payment operation, generating a payment graphic code generation request carrying preset risk control features;
sending the payment graphic code generation request to a risk control side, so that the risk control side detects whether there is a transaction risk on the application side according to the risk control features carried in the request and returns a detection result,
wherein the risk control features at least include: a payment account feature, a current location feature, and a station entering and exiting feature; and
after receiving a result of no transaction risk returned by the risk control side, generating and displaying a payment graphic code.

According to a third aspect of the embodiments of the present specification, there is provided a payment risk control method applied to a risk control side. The method includes:
after receiving a payment graphic code generation request sent by an application side, obtaining pre-stored historical risk control features of the account according to a payment account feature in the request; and
detecting whether there is a transaction risk on the application side by comparing the obtained historical risk control features with risk control features carried in the request, and returning a risk control detection result to the application side,
wherein a method for detecting the transaction risk includes: deciding whether a payment graphic code generated this time is used for station entering or station exiting according to a station entering and exiting feature; if it is for station entering, deciding whether a frequency of the payment graphic code generation request is higher than a preset threshold, and if so, determining that there is a transaction risk; and if it is for station exiting, deciding whether a current location feature and a corresponding station entering location feature in the historical risk control features meet a preset location relation condition, and if not, determining that there is a transaction risk.

According to a fourth aspect of the embodiments of the present specification, there is provided a payment risk control system including: an application side and a risk control side;
after receiving trigger of a station entering and exiting payment operation, generating, by the application side, a payment graphic code generation request carrying preset risk control features, and sending the request to the risk control side, wherein the risk control features at least include: a payment account feature, a current location feature and a station entering and exiting feature;
after receiving the payment graphic code generation request sent by the application side, obtaining, by the risk control side, pre-stored historical risk control features of the account according to the payment account feature in the request;
detecting, by the risk control side, whether there is a transaction risk on the application side by comparing the obtained historical risk control features with the risk control features carried in the request, and returning a risk control detection result to the application side, wherein the risk control side detects the transaction risk specifically in the following manner: deciding whether a payment graphic code generated this time is used for station entering or station exiting according to the station entering and exiting feature; if it is for station entering, deciding whether a frequency of the payment graphic code generation request is higher than a preset threshold, and if so, determining that there is a transaction risk; and if it is for station exiting, deciding whether the current location feature and a corresponding station entering location feature in the historical risk control features meet a preset location relation condition, and if not, determining that there is a transaction risk; and
after receiving a result of no transaction risk returned by the risk control side, generating and displaying, by the application side, a payment graphic code.

According to a fifth aspect of the embodiments of the present specification, there is provided a payment risk control apparatus applied to an application side device. The apparatus includes:
a request generating module, configured to generate a payment graphic code generation request carrying preset risk control features after receiving trigger of a station entering and exiting payment operation;
a request sending module, configured to send the payment graphic code generation request to a risk control side, so that the risk control side detects whether there is a transaction risk on an application side according to the risk control features carried in the request and returns a detection result,
wherein the risk control features at least include: a payment account feature, a current location feature, and a station entering and exiting feature; and
a graphic code generating module, configured to generate and display a payment graphic code after receiving a result of no transaction risk returned by the risk control side.

According to a sixth aspect of the embodiments of the present specification, there is provided a payment risk control apparatus applied to a risk control side device. The apparatus includes:
a feature obtaining module, configured to obtain pre-stored historical risk control features of the account according to a payment account feature in a payment graphic code generation request after receiving the payment graphic code generation request sent by an application side; and
a risk detecting module, configured to detect whether there is a transaction risk on the application side by comparing the historical risk control features with risk control features carried in the request, and return a risk control detection result to the application side,
wherein the risk detecting module detects the transaction risk specifically in the following manner: deciding whether a payment graphic code generated this time is used for station entering or station exiting according to a station entering and exiting feature; if it is for station entering, deciding whether a frequency of the payment graphic code generation request is higher than a preset threshold, and if so, determining that there is a transaction risk; and if it is for station exiting, deciding whether a current location feature and a corresponding station entering location feature in the historical risk control features meet a preset location relation condition, and if not, determining that there is a transaction risk.

According to the technical solutions provided by the embodiments of the present specification, for a scenario of electronic payment of public transportation fees, before a payment graphic code is generated on the application side, a transaction risk detection is performed on the application side to avoid public transportation payment by generating the graphic code in the presence of a transaction risk on the application side, thereby improving the security of users and payment institutions in this scenario.

It should be understood that the above general description and the following detailed description are only exemplary and explanatory, and do not limit the embodiments of the present specification.

In addition, none of the embodiments of the present specification needs to achieve all the effects described above.

### Brief Description of the Drawings

In order to more clearly explain the technical solutions in the embodiments of the present specification or the prior art, the following will briefly introduce the drawings required in the embodiments or the description of the prior art. Apparently, the drawings in the following description are only some of the embodiments recorded in the embodiments of the present specification. For those of ordinary skill in the art, other drawings can also be obtained based on these drawings.
Fig. 1 is a schematic structural diagram of a payment risk control system of an embodiment of the present specification.
Fig. 2 is a schematic flowchart of a payment risk control method of an embodiment of the present specification.
Fig. 3 is another schematic flowchart of a payment risk control method of an embodiment of the present specification.
Fig. 4 is yet another schematic flowchart of a payment risk control method of an embodiment of the present specification.
Fig. 5 is a schematic flowchart of a service establishing stage of an embodiment of the present specification.
Fig. 6 is a schematic flowchart of a payment graphic code generating stage of an embodiment of the present specification.
Fig. 7 is a schematic flowchart of a transaction settlement stage of an embodiment of the present specification.
Fig. 8 is a schematic structural diagram of a payment risk control apparatus of an embodiment of the present specification.
Fig. 9 is another schematic structural diagram of a payment risk control apparatus of an embodiment of the present specification.
Fig. 10 is a schematic structural diagram of a device used to configure an apparatus of an embodiment of the present specification.

### Detailed Description

In order to enable those skilled in the art to better understand the technical solutions in the embodiments of the present specification, the technical solutions in the embodiments of the present specification will be described in detail in conjunction with the drawings in the embodiments of the present specification. Apparently, the described embodiments are only a part of the embodiments of the present specification, but not all of them. Based on the embodiments of the present specification, all other embodiments obtained by those of ordinary skill in the art should fall within the scope of protection.

In the embodiments of the present specification, a payment risk control process for a scenario of electronic payment of public transportation fees involves an application side and a risk control side.

The application side is deployed on mobile terminal devices, such as users' smart phones, tablet computers, and other mobile terminal devices where applications can be installed, while the application side may be applications such as e-wallet clients installed on the devices, so that users can conveniently pay public transportation fees through clients in mobile terminals they carry when they travel outdoors.

The risk control side may be deployed on a cloud server in the form of a cloud risk control side, and realize communication connection with the application side through various forms of wireless networks. The specific form of the cloud server may be a specific server or server cluster.

In addition, when the users take public transportation vehicles such as buses, subways, ferries, etc., the movement of the vehicles, or location in closed cars and underground and other factors may make the quality of network connection between the mobile terminal device and the cloud server poor, which affects real-time risk control of the payment process.

Therefore, the risk control side may also be deployed in the form of a local risk control side on a local mobile terminal device where the application side is located and be connected with the application side through a wired link in a terminal. For example, a risk control software development kit (SDK) may be implanted in an e-wallet client.

The solutions in the present specification can be implemented by the application side and the cloud risk control side, or by the application side and the local risk control side. Of course, the solutions can also be implemented by combining the application side with the local risk control side and the cloud risk control side, which is not limited in the present specification.

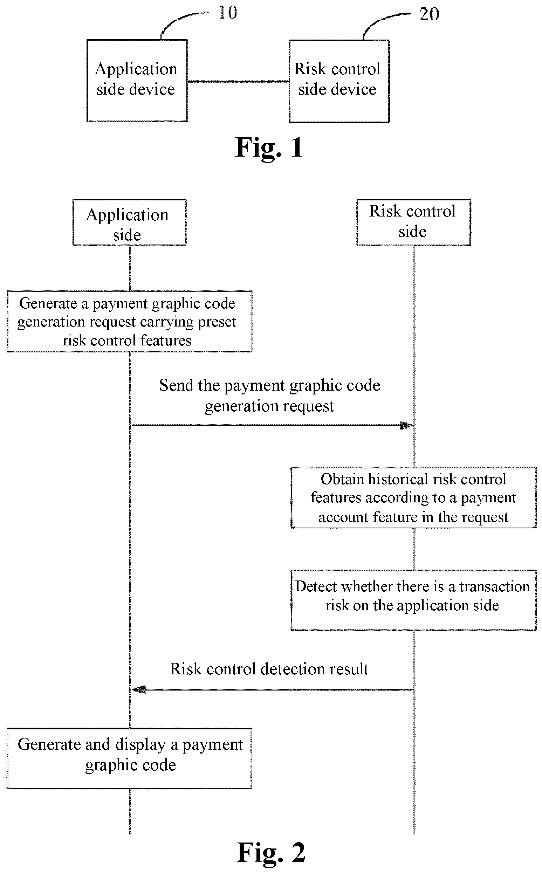

A schematic diagram of a system architecture corresponding to the embodiments of the present specification, as shown in Fig. 1, includes an application side device 10 and a risk control side device 20. As mentioned above, the application side device may be a mobile terminal device such as a smart phone and a tablet computer carried by a user, and the risk control side device may be the aforementioned cloud server or the mobile terminal device where the application side is located.

Fig. 2 is an interactive flowchart of a payment risk control method provided by an embodiment of the present specification, and the method may specifically include the following steps.

S201, after receiving trigger of a station entering and exiting payment operation, an application side generates a payment graphic code generation request carrying preset risk control features, and sends the request to a risk control side, wherein the risk control features at least include: a payment account feature, a current location feature, and a station entering and exiting feature.

In a public transportation fee payment scenario adopting this payment risk control solution, a user needs to perform a station entering and exiting payment operation on the application side when entering and exiting a station. For example, when passing station entering and exiting gates of a subway or getting on or off a bus or ferry, the user can turn on an e-wallet client (application side) installed in a mobile phone (application side device), and then perform operations such as clicking a button provided by the client to carry out the station entering and exiting payment operation.

After receiving the trigger of the station entering and exiting payment operation, the application side may display a payment graphic code to pay the fee. A general payment graphic code may be generated by the application side or the risk control side. In the scenario adopting the solution of the present specification, there may be a condition that the application side device has poor network signals and consequently cannot transmit data with the cloud risk control side through a wireless network; therefore, in the solution of the present specification, the payment graphic code is generated and displayed by the application side, and whether there is a transaction risk on the application side is detected before generating the graphic code so as to ensure the security of the payment process.

Of course, a code reading device may also be used to further detect whether an obtained payment graphic code is correct, whether it has been reused, and whether it has expired, which will not be described in detail here.

Accordingly, after receiving the trigger of the station entering and exiting payment operation, the application side generates the payment graphic code generation request carrying the preset risk control features and further sends the request to the risk control side.

In the embodiment of the present specification, in the case where the risk control side includes the cloud risk control side and the local risk control side, the cloud risk control side with better performance is preferably used for this payment risk control, but when it is not suitable to use the cloud risk control side due to poor quality of the wireless network connection between the application side and the cloud risk control side, a wired link is preferably used for communication, so the local risk control side with more stable data transmission performs this payment risk control.

Specifically, before sending by the application side, whether a current network signal of a mobile terminal where the application side is located has reached a preset strength is decided first; if so, it indicates that the current network signal is good, and the payment graphic code generation request may be sent to the cloud risk control side through the wireless network; and if not, it indicates that the current network signal is not good, it is not suitable to send data to the cloud risk control side, and the payment graphic code generation request may be sent to the local risk control side through the wired link.

S202, after receiving the payment graphic code generation request sent by the application side, the risk control side obtains pre-stored historical risk control features of the account according to the payment account feature in the request.

S203, the risk control side detects whether there is a transaction risk on the application side by comparing the obtained historical risk control features with the risk control features carried in the request, and returns a risk control detection result to the application side.

For ease of description, S202 and S203 are explained together.

Whether there is a transaction risk on the application side may be specifically detected through multiple methods according to various risk control features carried in the request sent by the application side and the historical risk control features.

In the embodiment of the present specification, whether the payment graphic code generated this time is used for station entering or station exiting may be decided according to the station entering and exiting feature; and if it is for station entering, whether a frequency of the payment graphic code generation request is higher than a preset threshold is decided, and if so, it means that the frequency of station entering paid through this account is too high, there may be risks such as account theft, maliciously sharing an account, etc., so it can be determined that there is a transaction risk.

In addition, the time of this request and the time of each request in history may be further determined, and combined with the current location feature and location features of each request in history, whether the location change of each time of station entering is reasonable is decided, e.g., whether the location changes frequently, or whether the change distance is large within a short period of time, so whether there are risks of account theft, collusion, etc. is decided.

If it is for station exiting, whether the current location feature and a corresponding station entering location feature in the historical risk control features meets a preset location relation condition is decided, and if not, it is determined that there is a transaction risk. For example, the time and location of station entering, the time and location of this time of station exiting, the running speed and route of used public transportation, and other information may be determined to decide whether the time and location of station exiting are reasonable so as to decide whether there are risks such as account theft and collusion.

In another embodiment of the present specification, a pre-stored blacklist may also be obtained. Objects with transaction risks are recorded in the blacklist, and may be a payment account, user information (such as a name, an ID number, a mobile phone number, a bank card number, etc.) bound to the payment account, and/or device information (such as a mobile phone identification code, a currently used wireless hotspot, etc.) of the mobile terminal where the application side is located, and the risk control side may determine whether an object corresponding to the request is recorded in the blacklist according to the risk control features in the payment graphic code generation request.

In yet another embodiment of the present specification, historical payment records of the payment account may also be obtained, and whether the account has risks is determined according to the historical payment records, so that whether there is currently a transaction risk on the application side is determined. For example, whether there is an unpaid amount, whether the payment amount is correct, whether there is a situation where the payment amount does not match the balance change, etc. may be determined.

After receiving the payment graphic code generation request sent by the application side, the risk control side may also update the historical risk control features of the corresponding payment account by using the risk control features carried in the payment graphic code generation request, so as to subsequently detect the transaction risk according to the updated historical risk control features.

The cloud risk control side and the local risk control side may synchronize data with each other to update locally stored historical records in time.

S204, after receiving a result of no transaction risk returned by the risk control side, the application side generates and displays a payment graphic code.

The application side generates the payment graphic code only after receiving the result of no transaction risk returned by the risk control side. In the embodiment of the present specification, the result returned by the risk control side may also include a specific permission identification which is included in the payment graphic code generated by the application side, so that in subsequent further detection, the code reading device may decide whether the graphic code is generated when the risk control side determines that there is no transaction risk.

In addition, besides real-time risk control in the process of generating and displaying the payment code on the application side, in the embodiment of the present specification, asynchronous data accumulation may also be performed between the application side and the risk control side, so that non-real-time risk control is performed on data of establishing a station entering and exiting payment service by a user and transaction settlement data, thereby realizing payment risk control on the application side in the whole payment process.

In order to explain the payment risk control solution of the embodiment of the present specification more clearly, payment risk control methods executed on the application side and the risk control side will be explained respectively below from the perspective of a single side.

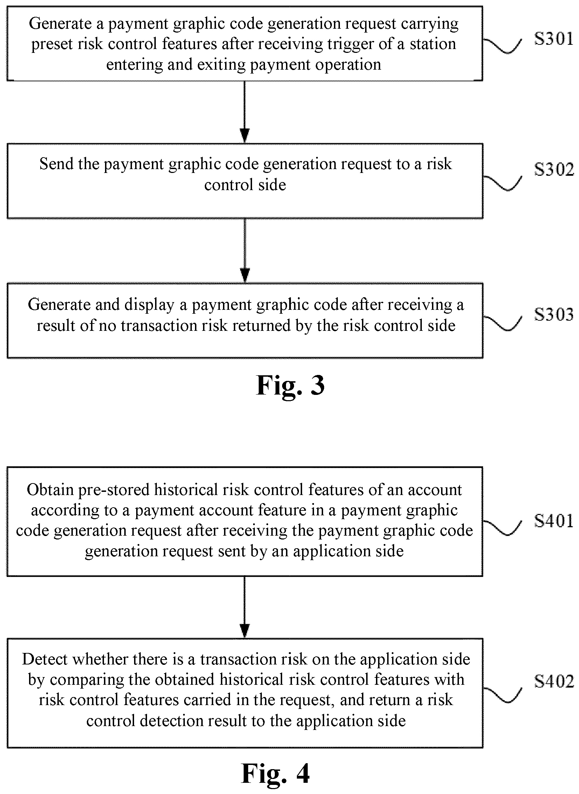

Fig. 3 is a flowchart of a payment risk control method executed on an application side, and the method may specifically include the following steps.

S301, after receiving trigger of a station entering and exiting payment operation, a payment graphic code generation request carrying preset risk control features is generated.

S302, the payment graphic code generation request is sent to a risk control side, so that the risk control side detects whether there is a transaction risk on the application side according to the risk control features carried in the request and returns a detection result.

The risk control features at least include: a payment account feature, a current location feature, and a station entering and exiting feature.

S303, after receiving a result of no transaction risk returned by the risk control side, a payment graphic code is generated and displayed.

Fig. 4 is a flowchart of a payment risk control method executed on a risk control side, and the method may specifically include the following steps.

S401, after receiving a payment graphic code generation request sent by an application side, pre-stored historical risk control features of the account are obtained according to a payment account feature in the request.

S402, whether there is a transaction risk on the application side is detected by comparing the obtained historical risk control features with risk control features carried in the request, and a risk control detection result is returned to the application side.

Here, a method for detecting the transaction risk includes: deciding whether a payment graphic code generated this time is used for station entering or station exiting according to a station entering and exiting feature; if it is for station entering, deciding whether a frequency of the payment graphic code generation request is higher than a preset threshold, and if so, determining that there is a transaction risk; and if it is for station exiting, deciding whether a current location feature and a corresponding station entering location feature in the historical risk control features meet a preset location relation condition, and if not, determining that there is a transaction risk.

The description of the foregoing embodiments may be referenced for details of the single-side execution methods, which will not be repeated here.

The payment risk control method provided in the present specification is illustrated below in conjunction with a more specific example.

A payment risk control process for a scenario of electronic payment of public transportation fees can be divided into three stages: a service establishing stage, a payment graphic code generating stage, and a transaction settlement stage.

Taking the payment of subway ride fees as an example, when the risk control side performs risk control, required input data may include: application side device information, current location information, a transaction account, balance change and payment history of the account, a blacklist of the risk control side, etc. According to the above input data, whether there are risks such as account theft, deduction failure, collusion, etc. are detected based on detection conditions such as whether it is in the blacklist, geographical location changes, payment frequency, balance changes, etc.

The specific implementation process is described below from the three stages.

### 1. Service establishing stage

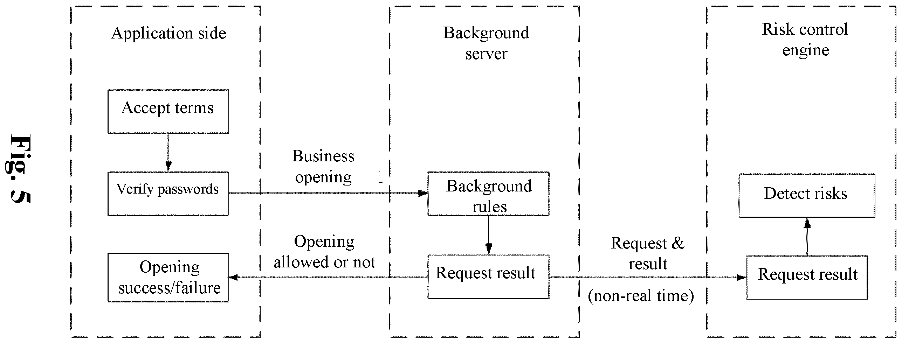

Fig. 5 is a schematic flowchart of the service establishing stage.

After a user installs an e-wallet client in a mobile phone, accepts agreement terms, and enters passwords for identity verification, the client (application side) sends a request to establish a station entering and exiting payment service to the risk control side. The risk control side may include a background server and a risk control engine of the e-wallet, and the request is first sent to the background server.

After receiving the request, the background server may perform relatively simple detection on the request based on preset rules, so as to determine whether to allow this establishing request, and return a result to the client. The preset rules may include risk detection rules, such as whether a credit value of the account meets the standard, and may also include other business rules, such as whether personal information of the user corresponding to the account meets the conditions.

The background server further needs to send the service establishing request and the processing result to the risk control engine, so that the risk control engine obtains the above input data, and detects whether there are risks of account theft, deduction failure, collusion, etc. based on the above detection conditions, and the process may be performed not in real time.

### 2. Payment graphic code generating stage

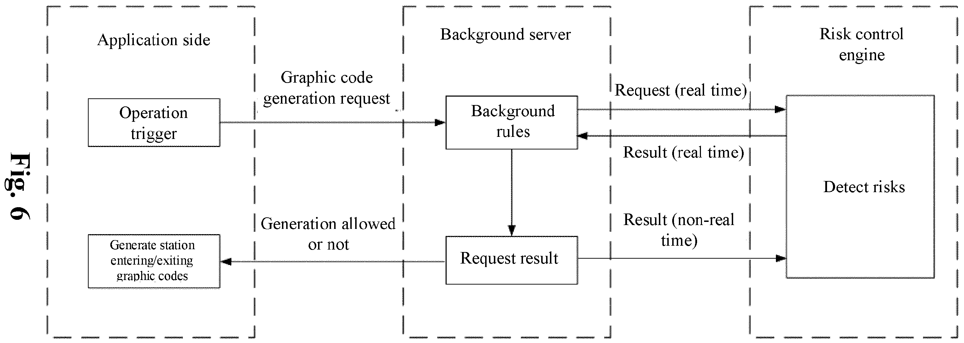

Fig. 6 is a schematic flowchart of the payment graphic code generating stage.

The user clicks a corresponding button in the client of the e-wallet, so that the client receives the trigger of the station entering and exiting payment operation and sends the payment graphic code generation request to the background server, and the background server forwards the request to the risk control engine, so that the risk control engine obtains the above input data and detects whether there are risks of account theft, deduction failure, collusion, etc. based on the above detection conditions. In addition, the background server may also perform relatively simple risk detection based on the preset rules.

The risk control engine returns the detection result to the background server. The background server combines risk detection performed at the local end to comprehensively make a decision on whether to allow the payment graphic code to be generated, and sends the decision to the client. After receiving the result that there is no transaction risk and the payment graphic code can be generated, the client generates and displays the payment graphic code used for entering and exiting subway station gates. The background server also needs to send the comprehensive processing result to the risk control engine for updating recorded related data. This process may be performed in non-real time.

### 3. Transaction settlement stage

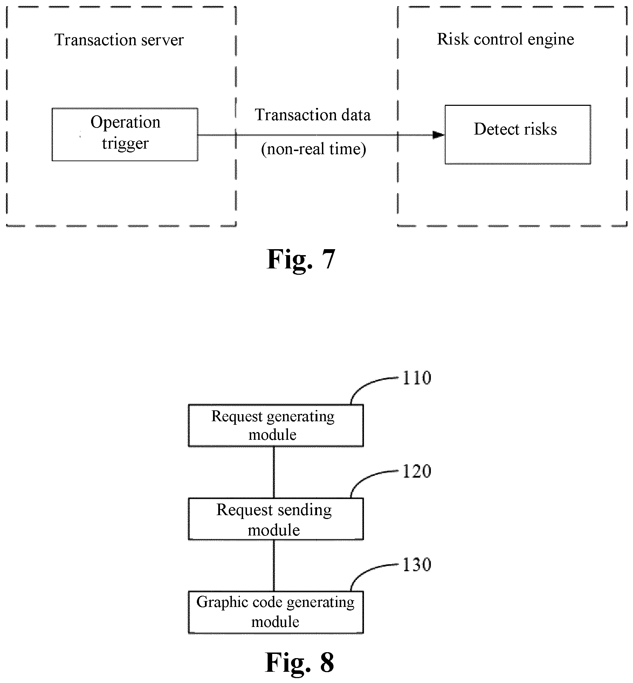

Fig. 7 is a schematic flowchart of the transaction settlement stage.

A transaction server may send transaction data to the risk control engine in real time or not in real time, so that the risk control engine detects whether there are risks of account theft, deduction failure, collusion, etc. based on the above detection conditions according to the transaction data and data asynchronously accumulated in advance.

It can be seen that by applying the above solution, for the scenario of electronic payment of the public transportation fees, detection of transaction risk is performed on the application side in real time before the payment graphic code is generated on the application side, to avoid public transportation payment by generating the graphic code in the presence of a transaction risk on the application side, thereby improving the security of users and payment institutions in this scenario.

In addition, for the condition of unstable network connecting quality in a scenario where public transportation is used, the risk control side may be deployed in the mobile terminal device where the application side is located and connected to the application side through a wired link, and in the service establishing and transaction settlement stages, risk control is performed through asynchronous data accumulation, so that transaction risk detection can be performed in a more timely manner without affecting the normal use by the user, so as to provide a better payment risk control service.

It is worth noting that the solution provided in the present specification may be further applied to a risk control enabling scenario, that is, the existing risk control engine or risk control SDK is directly interfaced with an e-wallet that requires risk control so as to perform risk control at three stages of service application, payment graphic code generation, and transaction settlement. On the premise that the e-wallet's own system does not need to be significantly modified, the e-wallet can obtain the risk control capability, and there is no need to re-develop the risk control engine, thereby improving the utilization efficiency of human and material resources.

Corresponding to the above method embodiment, the embodiments of the present specification further provide a payment risk control apparatus applied to an application side device. As shown in Fig. 8, the apparatus may include:
a request generating module 110, configured to generate a payment graphic code generation request carrying preset risk control features after receiving trigger of a station entering and exiting payment operation;
a request sending module 120, configured to send the payment graphic code generation request to a risk control side, so that the risk control side detects whether there is a transaction risk on an application side according to the risk control features carried in the request and returns a detection result,
wherein the risk control features at least include: a payment account feature, a current location feature, and a station entering and exiting feature; and
a graphic code generating module 130, configured to generate and display a payment graphic code after receiving a result of no transaction risk returned by the risk control side.

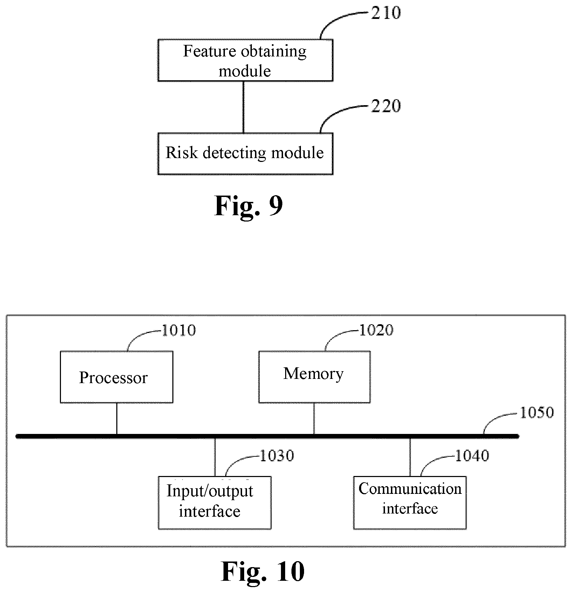

The embodiments of the present specification further provide a payment risk control apparatus applied to a risk control side device. As shown in Fig. 9, the apparatus may include:
a feature obtaining module 210, configured to obtain pre-stored historical risk control features of the account according to a payment account feature in a payment graphic code generation request sent by an application side after receiving the payment graphic code generation request; and
a risk detecting module 220, configured to detect whether there is a transaction risk on the application side by comparing the obtained historical risk control features with risk control features carried in the request, and return a risk control detection result to the application side,
wherein the risk detecting module 220 detects the transaction risk specifically through a following method: deciding whether a payment graphic code generated this time is used for station entering or station exiting according to a station entering and exiting feature; if it is for station entering, deciding whether a frequency of the payment graphic code generation request is higher than a preset threshold, and if so, determining that there is a transaction risk; and if it is for station exiting, deciding whether a current location feature and a corresponding station entering location feature in the historical risk control features meet a preset location relation condition, and if not, determining that there is a transaction risk.

The implementation process of corresponding steps in the above method may be specifically referenced for details of the implementation process of functions and effects of each module in the above apparatus, which will not be repeated here.

The embodiments of the present specification further provide a computer device, which at least includes a memory, a processor, and a computer program stored on the memory and executable on the processor, wherein the processor implements the foregoing payment risk control method when executing the program. The method at least includes:
a payment risk control method, including:
after receiving trigger of a station entering and exiting payment operation, generating, by an application side, a payment graphic code generation request carrying preset risk control features, and sending the request to a risk control side, wherein the risk control features at least include: a payment account feature, a current location feature, and a station entering and exiting feature;
after receiving the payment graphic code generation request sent by the application side, obtaining, by the risk control side, pre-stored historical risk control features of the account according to the payment account feature in the request;
detecting, by the risk control side, whether there is a transaction risk on the application side by comparing the obtained historical risk control features with the risk control features carried in the request, and returning a risk control detection result to the application side, wherein a method for detecting the transaction risk includes: deciding whether a payment graphic code generated this time is used for station entering or station exiting according to the station entering and exiting feature; if it is for station entering, deciding whether a frequency of the payment graphic code generation request is higher than a preset threshold, and if so, determining that there is a transaction risk; and if it is for station exiting, deciding whether the current location feature and a corresponding station entering location feature in the historical risk control features meet a preset location relation condition, and if not, determining that there is a transaction risk; and
after receiving a result of no transaction risk returned by the risk control side, generating and displaying, by the application side, a payment graphic code.

Fig. 10 shows a schematic diagram of a more specific hardware structure of a computing device provided by the embodiments of the present specification. The device may include: a processor 1010, a memory 1020, an input/output interface 1030, a communication interface 1040, and a bus 1050. The processor 1010, the memory 1020, the input/output interface 1030, and the communication interface 1040 realize mutual communication connection in the device through the bus 1050.

The processor 1010 may be implemented by a general-purpose central processing unit (CPU), a microprocessor, an application specific integrated circuit (ASIC), or one or more integrated circuits, and for executing related programs to implement the technical solutions provided by the embodiments of the present specification.

The memory 1020 may be implemented by a read only memory (ROM), a random access memory (RAM), a static storage device, a dynamic storage device, etc. The memory 1020 may store an operating system and other application programs. When the technical solutions provided by the embodiments of the present specification are implemented by software or firmware, related program code is stored in the memory 1020 and is called and executed by the processor 1010.

The input/output interface 1030 is configured to be connected with an input/output module to realize information input and output. The input/output module may be configured as a component in the device (not shown in the figure), or may also be externally connected to the device to provide corresponding functions. An input device may include a keyboard, a mouse, a touch screen, a microphone, various sensors, etc., and an output device may include a display, a speaker, a vibrator, an indicator light, etc.

The communication interface 1040 is configured to be connected with a communication module (not shown in the figure) to implement communication interaction between the device and other devices. The communication module may realize communication in a wired mode (such as a USB, a network cable, etc.), or in a wireless mode (such as a mobile network, WIFI, Bluetooth, etc.).

The bus 1050 includes an access and transmits information between all components (such as the processor 1010, the memory 1020, the input/output interface 1030, and the communication interface 1040) of the device.

It should be noted that although the above device only shows the processor 1010, the memory 1020, the input/output interface 1030, the communication interface 1040, and the bus 1050, the device may also include other components necessary to achieve normal operation in a specific implementation process. In addition, those skilled in the art may understand that the above-mentioned device may also include only the components necessary to implement the solutions of the embodiments of the present specification, rather than including all the components shown in the figures.

The embodiments of the present specification further provide a computer-readable storage medium on which a computer program is stored, and the foregoing payment risk control method is implemented when the program is executed by a processor. The method at least includes:
a payment risk control method, including:
after receiving trigger of a station entering and exiting payment operation, generating, by an application side, a payment graphic code generation request carrying preset risk control features, and sending the request to a risk control side, wherein the risk control features at least include: a payment account feature, a current location feature, and a station entering and exiting feature;
after receiving the payment graphic code generation request sent by the application side, obtaining, by the risk control side, pre-stored historical risk control features of an account according to the payment account feature in the request;
detecting, by the risk control side, whether there is a transaction risk on the application side by comparing the obtained historical risk control features with the risk control features carried in the request, and returning a risk control detection result to the application side, wherein a method for detecting the transaction risk includes: deciding whether a payment graphic code generated this time is used for station entering or station exiting according to the station entering and exiting feature; if it is for station entering, deciding whether a frequency of the payment graphic code generation request is higher than a preset threshold, and if so, determining that there is a transaction risk; and if it is for station exiting, deciding whether the current location feature and a corresponding station entering location feature in the historical risk control features meet a preset location relation condition, and if not, determining that there is a transaction risk; and
after receiving a result of no transaction risk returned by the risk control side, generating and displaying, by the application side, a payment graphic code.

The computer-readable medium includes permanent and non-permanent, removable and non-removable media, and can store information by any method or technology. The information may be computer-readable instructions, data structures, modules of programs, or other data. Examples of computer storage media include, but are not limited to, a phase change memory (PRAM), a static random access memory (SRAM), a dynamic random access memory (DRAM), other types of random access memories (RAM), read-only memories (ROM), electrically erasable programmable read-only memories (EEPROM), flash memories or other memory technologies, read-only compact disc read-only memories (CD-ROM), digital versatile disks (DVD) or other optical storage, magnetic tape cassettes, magnetic tape magnetic disk storage or other magnetic storage devices, or any other non-transmission media, and the computer storage media can be used to store information that can be accessed by computing devices. As defined in this article, the computer-readable media do not include transitory computer-readable media, such as modulated data signals and carrier waves.

It can be known from the description of the above implementations that those skilled in the art can clearly understand that the embodiments of the present specification can be implemented by means of software plus a necessary general hardware platform. Based on this understanding, the technical solutions of the embodiments of the present specification in essence or a part thereof making contributions to the prior art can be embodied in the form of software products, and the computer software products can be stored in a storage medium, such as ROM/RAM, magnetic disks, optical disks, etc., and include a plurality of instructions to enable a computer device (which may be a personal computer, server, or network device) to perform the methods described in the embodiments of the present specification or some parts of the embodiments.

The system, apparatus, module, or unit explained in the above embodiments may be specifically implemented by a computer chip or entity, or implemented by a product having a certain function. A typical implementation device is a computer, and the specific form of the computer may be a personal computer, a laptop computer, a cellular phone, a camera phone, a smart phone, a personal digital assistant, a media player, a navigation device, an email sending and receiving device, a game console, a tablet computer, a wearable device, or a combination of any of these devices.

The embodiments in the present specification are described in a progressive manner. The same or similar parts between the embodiments can be referred to by each other. Each embodiment focuses on differences from other embodiments. In particular, the apparatus embodiment is described relatively simply since it is basically similar to the method embodiment, and part of the description of the method embodiment may be referenced for relevant parts. The apparatus embodiment described above is only schematic, wherein the modules described as separate components may or may not be physically separated, and the functions of the modules may be implemented in the same or multiple pieces of software and/or hardware when the solutions of the embodiments of the present specification are implemented. Part or all of the modules may also be selected according to actual needs to achieve the purpose of the solution of the present embodiment. Those of ordinary skill in the art can understand and implement without creative effort.

The above is only a specific implementation of the embodiments of the present specification. It should be pointed out that for those of ordinary skill in the art, several improvements and retouches can further be made without departing from the principles of the embodiments of the present specification. These improvements and retouches should also be regarded as the scope of protection of the embodiments of the present specification.

## Claims

1. A payment risk control method, the method comprising:
after receiving trigger of a station entering and exiting payment operation, generating, by an application side, a payment graphic code generation request carrying preset risk control features, and sending the request to a risk control side, wherein the risk control features comprise at least: a payment account feature, a current location feature, and a station entering and exiting feature;
after receiving the payment graphic code generation request sent by the application side, obtaining, by the risk control side, pre-stored historical risk control features of an account according to the payment account feature in the request;
detecting, by the risk control side, whether there is a transaction risk on the application side by comparing the obtained historical risk control features with the risk control features carried in the request, and returning a risk control detection result to the application side, wherein a method for detecting the transaction risk includes: deciding whether a payment graphic code generated this time is used for station entering or station exiting according to the station entering and exiting feature; if it is for station entering, deciding whether a frequency of the payment graphic code generation request is higher than a preset threshold, and if so, determining that there is a transaction risk; and if it is for station exiting, deciding whether the current location feature and a corresponding station entering location feature in the historical risk control features meet a preset location relation condition, and if not, determining that there is a transaction risk; and
after receiving a result of no transaction risk returned by the risk control side, generating and displaying, by the application side, a payment graphic code.

2. The method according to claim 1, wherein the risk control side comprises:
a cloud risk control side and/or a local risk control side,
wherein the cloud risk control side is deployed on a cloud server and connected with the application side through a wireless network, and the local risk control side is deployed on a local mobile terminal where the application side is located and connected with the application side through a wired link in the terminal.

3. The method according to claim 2, wherein under the condition that the risk control side comprises the cloud risk control side and the local risk control side, sending the request to the risk control side comprises:
deciding, by the application side, whether a current network signal of the mobile terminal reaches a preset strength; if so, sending the payment graphic code generation request to the cloud risk control side, and if not, sending the payment graphic code generation request to the local risk control side.

4. The method according to claim 1, after the risk control side receives the payment graphic code generation request sent by the application side, further comprising:
updating the historical risk control features of a corresponding payment account with the risk control features carried in the payment graphic code generation request, so that the transaction risk detection is performed subsequently according to the updated historical risk control features.

5. The method according to claim 1, wherein the method for detecting the transaction risk further comprises:
obtaining a pre-stored blacklist; and
determining whether objects with transaction risks recorded in the blacklist comprise an object corresponding to the request according to the risk control features in the payment graphic code generation request,
wherein the object comprises at least: a payment account, user information bound to the payment account, and/or device information of a mobile terminal where the application side is located.

6. A payment risk control method applied to an application side, the method comprising:
after receiving trigger of a station entering and exiting payment operation, generating a payment graphic code generation request carrying preset risk control features;
sending the payment graphic code generation request to a risk control side, so that the risk control side detects whether there is a transaction risk on the application side according to the risk control features carried in the request and returns a detection result,
wherein the risk control features comprise at least: a payment account feature, a current location feature, and a station entering and exiting feature; and
after receiving a result of no transaction risk returned by the risk control side, generating and displaying a payment graphic code.

7. A payment risk control method applied to a risk control side, the method comprising:
after receiving a payment graphic code generation request sent by an application side, obtaining pre-stored historical risk control features of the account according to a payment account feature in the request; and
detecting whether there is a transaction risk on the application side by comparing the obtained historical risk control features with risk control features carried in the request, and returning a risk control detection result to the application side,
wherein a method for detecting the transaction risk includes: deciding whether a payment graphic code generated this time is used for station entering or station exiting according to a station entering and exiting feature; if it is for station entering, deciding whether a frequency of the payment graphic code generation request is higher than a preset threshold, and if so, determining that there is a transaction risk; and if it is for station exiting, deciding whether a current location feature and a corresponding station entering location feature in the historical risk control features meet a preset location relation condition, and if not, determining that there is a transaction risk.

8. A payment risk control system, the system comprising: an application side and a risk control side;
after receiving trigger of a station entering and exiting payment operation, generating, by the application side, a payment graphic code generation request carrying preset risk control features, and sending the request to the risk control side, wherein the risk control features comprise at least: a payment account feature, a current location feature, and a station entering and exiting feature;
after receiving the payment graphic code generation request sent by the application side, obtaining, by the risk control side, pre-stored historical risk control features of the account according to the payment account feature in the request;
detecting, by the risk control side, whether there is a transaction risk on the application side by comparing the obtained historical risk control features with the risk control features carried in the request, and returning a risk control detection result to the application side, wherein the risk control side detects the transaction risk specifically in the following manner: deciding whether a payment graphic code generated this time is used for station entering or station exiting according to the station entering and exiting feature; if it is for station entering, deciding whether a frequency of the payment graphic code generation request is higher than a preset threshold, and if so, determining that there is a transaction risk; and if it is for station exiting, deciding whether the current location feature and a corresponding station entering location feature in the historical risk control features meet a preset location relation condition, and if not, determining that there is a transaction risk; and
after receiving a result of no transaction risk returned by the risk control side, generating and displaying, by the application side, a payment graphic code.

9. The system according to claim 8, wherein the risk control side comprises:
a cloud risk control side and/or a local risk control side,
wherein the cloud risk control side is deployed on a cloud server and connected with the application side through a wireless network, and the local risk control side is deployed on a local mobile terminal where the application side is located and connected with the application side through a wired link in the terminal.

10. The system according to claim 9, wherein under the condition that the risk control side comprises the cloud risk control side and the local risk control side, the application side sends the request to the risk control side specifically by:
deciding, by the application side, whether a current network signal of the mobile terminal reaches a preset strength; if so, sending the payment graphic code generation request to the cloud risk control side, and if not, sending the payment graphic code generation request to the local risk control side.

11. The system according to claim 8, after the risk control side receives the payment graphic code generation request sent by the application side:
further updating the historical risk control features of a corresponding payment account with the risk control features carried in the payment graphic code generation request, so that the transaction risk detection is performed subsequently according to the updated historical risk control features.

12. The system according to claim 8, wherein the risk control side detects the transaction risk specifically further by:
obtaining a pre-stored blacklist; and
determining whether objects with transaction risks recorded in the blacklist comprise an object corresponding to the request according to the risk control features in the payment graphic code generation request,
wherein the object comprises at least: a payment account, user information bound to the payment account, and/or device information of a mobile terminal where the application side is located.

13. A payment risk control apparatus applied to an application side device, the apparatus comprising:
a request generating module, configured to generate a payment graphic code generation request carrying preset risk control features after receiving trigger of a station entering and exiting payment operation;
a request sending module, configured to send the payment graphic code generation request to a risk control side, so that the risk control side detects whether there is a transaction risk on the application side according to the risk control features carried in the request and returns a detection result,
wherein the risk control features comprise at least: a payment account feature, a current location feature, and a station entering and exiting feature; and
a graphic code generating module, configured to generate and display a payment graphic code after receiving a result of no transaction risk returned by the risk control side.

14. A payment risk control apparatus applied to a risk control side device, the apparatus comprising:
a feature obtaining module, configured to obtain pre-stored historical risk control features of the account according to a payment account feature in a payment graphic code generation request sent by an application side after receiving the payment graphic code generation request; and
a risk detecting module, configured to detect whether there is a transaction risk on the application side by comparing the historical risk control features with risk control features carried in the request, and return a risk control detection result to the application side,
wherein the risk detecting module detects the transaction risk specifically in the following manner: deciding whether a payment graphic code generated this time is used for station entering or station exiting according to a station entering and exiting feature; if it is for station entering, deciding whether a frequency of the payment graphic code generation request is higher than a preset threshold, and if so, determining that there is a transaction risk; and if it is for station exiting, deciding whether a current location feature and a corresponding station entering location feature in the historical risk control features meet a preset location relation condition, and if not, determining that there is a transaction risk.

15. A computer device, comprising a memory, a processor, and a computer program stored on the memory and executable on the processor, wherein the processor implements the method according to any one of claims 1 to 7 when executing the program.
